Europäisches Patentamt

European Patent Office

Office européen des brevets

(11) Veröffentlichungsnummer: **0 243 595**
**A2**

(12) **EUROPÄISCHE PATENTANMELDUNG**

(21) Anmeldenummer: **87102327.1**

(22) Anmeldetag: **19.02.87**

(51) Int. Cl.⁴: **C08L 77/00 , C08L 65/00**

---

Ein Antrag gemäss Regel 88 EPÜ auf Berichtigung einiger Screibfehler auf Seite 9 liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **22.04.86 DE 3613527**

(43) Veröffentlichungstag der Anmeldung:
**04.11.87 Patentblatt 87/45**

(84) Benannte Vertragsstaaten:
**AT BE CH DE ES FR GB IT LI NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Jadamus, Hans, Dr.**
**Hervester Strasse 8**
**D-4370 Marl(DE)**
Erfinder: **Bartz, Wilfried, Dr.**
**Stargarder Strasse 12**
**D-4370 Marl(DE)**
Erfinder: **Dröscher, Michael, Dr.**
**Hetkerbruch 34**
**D-4270 Dorsten 11(DE)**

---

(54) **Schlagzähe Polyamid-Formmassen.**

(57) Schlagzähe Polyamid-Formmasse bestehend aus einem Gemisch von

    A. 80 bis 98 Gew.-% eines Polyamids

und

    B. 2 bis 20 Gew.-% eines Polyalkenameren.

EP 0 243 595 A2

## Schlagzähe Polyamid-Formmassen

Gegenstand der Erfindung sind schlagzähe Polyamid-Formmassen.

Polyamide sind bekannte und bewährte Konstruktionswerkstoffe, die sich z. B. nach Spritzgieß-oder Extrusionsverfahren verarbeiten lassen. In der Regel weisen Polyamide, insbesondere nach Konditionierung, eine gute Zähigkeit auf. Für bestimmte Anwendungen sind jedoch Verbesserungen hinsichtlich der Schlag- und Kerbschlagzähigkeit im spritzfrischen Zustand und besonders bei tiefen Temperaturen erwünscht.

Eine geeignete Maßnahme zur Annäherung an dieses Ziel ist die Verwendung von Polyamidblends, worunter in diesem Zusammenhang die innige Vermischung der Polyamide mit zähen Elastomeren oder zähen, hochmolekularen Thermoplasten verstanden wird. Spezielle Grundeigenschaften der Zusatzpolymeren können dadurch auf die Polyamidblends übertragen werden, ohne die typischen Polyamideigenschaften zu zerstören.

Um Polyamidblends mit zufriedenstellenden Eigenschaften zu erhalten, sind die zuzumischenden Polymeren jeweils auf den Anwendungsfall und den jeweiligen Polyamid-Typ hin zu optimieren. Da derartige Sonderpolymere in der erforderlichen Auswahl nicht am Markt verfügbar sind, besteht in der Regel das Problem, daß jeweils spezielle Produkte in zumeist kleinen Mengen auf kostenintensive Art hergestellt werden müssen.

Wegen dieser Probleme wird in der Praxis bei der Herstellung der Polyamid-Verschnittpolymeren ein zweiter Weg beschritten: Man greift auf die in großer Menge und Vielfalt verfügbaren olefinischen Polymeren, wie z. B. Polyethylen oder Ethylen/Propylen/-Dien-Copolymeren, zurück, die eine hohe (Kälte-oder Kerb-)Zähigkeit aufweisen.

Nach einem Vorschlag der DE-PS 11 31 883 sollen Gemische aus (1) Carbonamidgruppen enthaltenden Polykondensaten und (2) Polyolefinen, Polystyrol, Olefin-bzw. Styrolmischpolymerisaten, die außer Olefin oder Styrol auch andere olefinische ungesättigte Monomere einpolymerisiert enthalten können sowie (3) Radikale bildenden Katalysatoren bei 50 bis 350 °C homogenisiert werden, wobei sich Pfropfcopolymere aus (1) und (2) bilden sollen. Die so erhaltenen Produkte konnten jedoch nicht voll befriedigen, da Vernetzung eintritt, die zu mangelhafter Verarbeitbarkeit führt.

Die offensichtlich bevorzugte und wirkungsvollste Ausführungsform des zweiten Weges besteht in der Pfropfung von hochmolekularen olefinischen Elastomeren mit vorzugsweise Maleinsäureanhydrid, beispielsweise nach Arbeitsverfahren, wie sie in der DE-OS 24 01 149 beschrieben sind. Nachteilig ist, daß wegen der stark gesundheitsgefährdenden Wirkung des Maleinsäureanhydrids die Reaktion nicht ohne weiteres in den üblichen Anlagen durchgeführt werden kann. Zudem sind die wirkungsvollen Elastomeren wegen ihrer Klebrigkeit schwer handhabbar, und der Pfropfprozeß führt wegen der stark scherenden Aggregate und der thermischen Belastung häufig zu Schädigungen der Elastomeren durch Verfärbungen, Abbau und/oder partielle Vernetzung.

Alle für den oben beschriebenen alternativen Weg brauchbaren Produkte müssen ein hohes Molgewicht aufweisen und besitzen demzufolge hohe Schmelzviskositäten, wenn sie gute Ergebnisse in den Polyamidblends bewirken sollen. Zugleich werden optimale Eigenschaften und Wirkungsgrade nur dann erzielt, wenn die Polymeren feindispers in der Polyamidmatrix verteilt sind. Diese Einarbeitung bereitet wegen der hohen Viskosität der Zusatzpolymeren und wegen der ungünstigen Viskositätsrelation Polyamid/Zusatzpolymer Schwierigkeiten. Durchsatzmenge und Schwankungen der Scherbedingungen erschweren die Herstellung einer reproduzierbar guten Qualität. Die Verwendung stark scherender Mischaggregate senkt zwar die Streuung der Werte, erfordern jedoch einen hohen Energieaufwand und können zu Schädigungen der Polyamidblends führen.

Aufgabe der Erfindung ist es, unter Beibehaltung der bekannten guten Eigenschaften die Nachteile des Standes der Technik zu vermeiden.

Die Aufgabe wurde gelöst durch Polyamid-Formmassen bestehend aus einem innigen Gemisch von

A. 80 bis 98 Gew.-% eines Polyamids mit einem $Eta_{rel}$ -Wert im Bereich von 1,2 bis 2,4 (gemessen analog DIN 53 727 in 0,5 g/dl m-Kresol-Lösung/25 °C) und

B. 2 bis 40 Gew.-% eines Polyalkenameren mit einer Viskositätszahl (J) im Bereich von 50 bis 350 ml/g (gemessen analog DIN 53 726 in 0,5 g/dl Toluol-Lösung/25 °C).

Als Polyamide (Komponente A.) eignen sich die Homopolyamide PA 6, 11, 12, 46, 66, 68, 69, 610, 612 o. ä. Es können aber auch entsprechende Copolyamide verwendet werden. Für die Herstellung der Polyamide werden als Monomere (cyclo)aliphatische Diamine mit 4 bis 12 C-Atomen, wie z. B. Tetramethylendiamin, Hexamethylendiamin und Isophorondiamin, aliphatische oder aromatische Dicarbonsäuren mit 6 bis 12 C-Atomen, wie z. B. Adipinsäure, Azelainsäure, Korksäure, Dodecandisäure, Isophthalsäure und Terephthalsäure, oder Alpha,Omega-Aminocarbonsäuren bzw. deren Lactame mit 6 bis 12 C-Atomen, wie z. B. Caprolactam und Laurinlactam, eingesetzt.

Die Polyamide weisen eine relative Lösungsviskosität (gemessen analog DIN 53 727 bei 25 °C in 0,5 g/dl m-Kresol-Lösung) von 1,2 bis 2,4, vorzugsweise von 1,6 bis 2,3, auf.

Als Endgruppen der Polyamide liegen Carboxyl-und/oder Aminogruppen vor. Es können aber auch Polyamide mit nichtpolaren Endgruppen eingesetzt werden. Bei Verwendung von Polyalkenameren mit funktionellen Endgruppen werden Polyamide bevorzugt, deren Endgruppen zu 20 bis 100 Mol-%, insbesondere zu 40 bis 70 Mol-%, aus Aminogruppen bestehen.

Die Komponente A. kann auch ein Gemisch von zwei oder mehr Polyamiden sein.

Die Polyamide sind als solche bekannt und können nach dem Stand der Technik hergestellt werden (Kirk-Othmer, Encyclopedia of chemical Technology, Vol. 18, John Wiley & sons (1982), Seiten 328 bis 435, US-PSS 2 071 250, 2 071 251, 2 130 523, 2 130 948, 2 241 322, 2 312 966, 2 512 606 und 3 393 210).

Polyalkenamere werden aus cyclischen Olefinen, die mindestens eine nicht substituierte Ringdoppelbindung aufweisen, mit Hilfe sogenannter Metathesekatalysatoren unter Öffnung des Ringes durch Polymerisation erhalten (DE-OSS 15 70 940, 16 45 038, 17 20 798, 17 70 143 und 18 05 158, DE-AS 12 99 868, GB-PSS 1 124 456, 1 194 013 und 1 182 975).

Unter cyclischen Olefinen werden ungesättigte Kohlenwasserstoffe mit 4 bis 12 (ausgenommen 6) Ring-Kohlenstoffatomen in einem oder mehreren Ringen verstanden, die in mindestens einem Ring mindestens eine nicht in Konjugation zu eventuell weiteren vorhandenen Doppelbindungen beliebigen Substitutionsgrades stehende, unsubstituierte Doppelbindung aufweisen, beispielsweise Cyclobuten, Cyclopenten, Cyclohepten, cis-und trans-Cycloocten, Cyclononen, Cyclodecen, Cycloundecen, cis-und trans-Cyclododecen, cis-cis-Cyclooctadien-(1.5), 1-Methylcyclooctadien-(1.5), 3-Methylcyclooctadien-(1.5), 3.7-Dimethylcyclooctadien-(1.5).

Die Doppelbindungen in den Polyalkenameren können in der cis-oder trans-Form vorliegen. Bevorzugt ist ein solcher Gehalt an trans-Doppelbindungen, daß die Polymeren einen hinreichenden kristallinen Anteil aufweisen, daß sie bei Raumtemperatur praktisch klebfrei und damit in Granulat-, Krümel-, Schrot-oder Pulverform gut handhabbar sind.

Geeignet sind Polyalkenamere mit Molekulargewichten entsprechend einer Viskositätszahl von 50 bis 350 ml/g, vorzugsweise 80 bis 160 ml/g, gemessen bei 25 °C als 0,5 g/dl Lösung in Toluol.

Polyalkenamere als solche sowie ihre Herstellung sind bekannt (Kautschuk + Gummi, Kunststoffe 1981, Seiten 185 bis 190; K. J. Ivin, Olefin Metathesis, Academic Press 1983, Seite 190 ff.).

In den Polyalkenameren können darüber hinaus noch Epoxi-, Carboxyl-oder Carbonsäureanhydridgruppen als funktionelle Gruppen vorhanden sein.

Die Einführung dieser funktionellen Gruppen in die Polyalkenamere erfolgt nach bekannten Verfahren in Lösung oder in der Schmelze.

Epoxygruppen lassen sich beispielsweise durch partielle Epoxidierung der Doppelbindungen mit Persäuren einführen. Der Gehalt an Epoxidsauerstoff sollte bei 0,5 bis 9, vorzugsweise 3 bis 8, Masse-% liegen. Alternativ gelangt man durch Pfropfung mit beispielsweise Glycidylmethacrylat zu brauchbaren Epoxyderivaten. Die Einführung von Carboxyl-bzw. Carbonsäureanhydridgruppen erfolgt durch Pfropfung mit geeigneten ungesättigten Monomeren, wie z. B. (Meth)acrylsäure, Maleinsäure(anhydrid), Fumarsäure, Maleinsäuremonoester, Fumarsäuremonoester, Norbornendicarbonsäureanhydrid, Itaconsäure(anhydrid) und analogen Verbindungen. Erfahrungsgemäß reicht ein Gehalt an gepfropftem Monomer von 0,2 bis 5 Gew.-%, vorzugsweise von 0,5 bis 3 Gew.-%, - bezogen auf das Polyalkenamer. Die Modifizierung der Polyalkenamere ist nicht Gegenstand dieser Erfindung. Ob ein ausreichender Pfropfungsgrad vorliegt, ist für den Fachmann durch einen einfachen Versuch zu ermitteln. Neben den erfindungsgemäßen funktionellen Gruppen können weitere funktionelle Gruppen oder Substituenten eingeführt werden. Alle Modifizierungsmaßnahmen sind so durchzuführen, daß keine Vernetzung und/oder störende Molgewichtserhöhung bei den Polyalkenameren eintreten. Der Gelgehalt der modifizierten Polyalkenamere, bestimmt als unlöslicher Anteil in heißem Toluol, muß < 10 Gew.-%, vorzugsweise < 5 Gew.-%, betragen; die Viskositätszahlen sollen nicht wesentlich, d. h. maximal 20 %, oberhalb der der Ausgangspolyalkenamere liegen.

Die erfindungsgemäßen Formmassen enthalten neben dem Polyamid 2 bis 20 Gew.-%, vorzugsweise 5 bis 15 Gew.-%, Polyalkenamer. Bei Verwendung von Polyalkenameren ohne funktionelle Gruppen sollte deren Anteil 15 Gew.-% an der Formmasse nicht übersteigen.

Sofern erforderlich, können in die erfindungsgemäßen Formmassen noch übliche Hilfs-und Zusatzstoffe, wie Stabilisatoren, Weichmacher, Verarbeitungshilfsmittel, Antistatika, Flammschutzmittel etc., eingearbeitet werden. Es ist auch möglich, Füll-und Verstärkungsstoffe, wie Mineralien, Glas-oder Kohlenstoffasern, Mikroglaskugeln, Ruß u. a., einzusetzen.

Es können in untergeordneten Mengen auch polymere Zusatzstoffe, Schlagzähmodifier usw. mitverwendet werden.

Die erfindungsgemäßen Formmassen weisen den unerwarteten Vorteil auf, daß mit leicht zugänglichen, d. h. handelsüblichen, die Schlagzähigkeit verbessernden Polymeren gearbeitet werden kann, während der Stand der Technik zwar wirksame Zusatzpolymere (funktionalisierte Kautschuke, Polyolefine) beschreibt, diese aber gesondert und nur in kleinen Mengen hergestellt werden müßten. Darüber hinaus ergeben die erfindungsgemäßen Polyalkenamere mit bereits bekannten, die Schlagzähigkeit verbessernden Polymeren synergistische Effekte, so daß in einem solchen Fall geringere Mengen an Zusatzpolymeren in das Polyamid eingearbeitet werden müssen.

Die Kerbschlagzähigkeitsprüfungen nach ISO 180 wurden an gespritzten Normkleinstäben bei den angegebenen Temperaturen durchgeführt. Zwischen dem Verspritzen und Prüfen wurden die Stäbe ca. 24 h bei 50 % rel. Feuchte gelagert (23 °C).

In den folgenden Beispielen sind alle Angaben von Teilen bzw. % als Gew.-Teile bzw. Gew.-% zu verstehen.

Mit Buchstaben gekennzeichnete Beispiele sind nicht erfindungsgemäß.-

Beispiele

1. Einsatzstoffe
    1.1 Polyamid 6
Polyamid 6 (Eta$_{rel}$: 1,99; ULTRAMID$^R$ B4)
    1.2 Polyamid 12
Polyamid 12 (Eta$_{rel}$: 2,15; VESTAMID$^R$ X 1852)
    1.3 Weichmacherhaltiges Polyamid 12
90 Gew.-Teile des Polyamids 12 (1.1)
10 Gew.-Teile Benzolsulfosäure-N-n-butylamid
1 Gew.-Teil NN'-Hexamethylen-bis-(3,5-di-tert.-butyl-4-hydroxi)-dihydrozimtsäureamid
werden in einem Doppelschneckenkneter bei 220 °C aufgeschmolzen, vermischt, granuliert und auf eine Restfeuchte von 0,05 % getrocknet.
    1.4 Polyoctenamer
Polyoctenamer (J: 120 ml/g; trans-Gehalt: 80 %; VESTENAMER$^R$ 8012)
    1.5 EPDM-Kautschuk
EPDM-Kautschuk (73 Gew.-% Ethylen; 22 Gew.-% Propylen; 5 Gew.-% Ethylidennorbornen; Mooney-Wert (ML$_{1+4}$ 100 °C): 85; BUNA$^R$ AP 437)
    1.6 Funktionalisierter EPDM-Kautschuk
Ein Addukt aus Maleinsäureanhydrid (2,5 Gew.-%) und EPDM-Kautschuk-(1.5) (97,5 Gew.-%) wird gemäß der in DE-OS 24 01 149, Beispiel 1, beschriebenen Methode hergestellt.
    1.7 Polyethylen
Polyethylen (VESTOLEN$^R$ A 4516)
2. Herstellung der Formmassen
    2.1 Formmasse aus Polyamid 6 und Polyoctenamer (Tabelle I)
Aus Polyamid 6 (1.1) und Polyoctenamer (1.4) wurde in einem Doppelschneckenkneter (Typ ZSK 30 - Fa. Werner und Pfleiderer) bei 260 °C eine Schmelzenmischung hergestellt, die wie üblich granuliert wurde. Es wurde auf eine Restfeuchte von 0,1 Gew.-% getrocknet.

4

## Tabelle I

| Versuch | PA 6 *) | Polyoctenamer | Kerbschlagzähigkeit |
| --- | --- | --- | --- |
|  | [Gew.-%] | | [kJ/m²] |
| A | 100 | - | 7 |
| 1 | 90 | 10 | 23 |

*) Polyamid 6

### 2.2 Formmasse aus Polyamid 12 (1.1) und Polyoctenamer (1.6) (Tabelle II)

Es wurde wie unter 2.1 beschrieben verfahren mit dem Unterschied, daß bei 240 °C statt bei 260 °C umgeschmolzen wurde. Zum Vergleich wurde ein Polyethylen (1.7) eingesetzt.

## Tabelle II

| Versuch | PA 12 *) | PE **) | Polyoctenamer | Kerbschlagzähigkeit |
| --- | --- | --- | --- | --- |
|  | [Gew.-%] | | | [kJ/m²] |
| B | 100 | - | - | 14 |
| C | 90 | 10 | - | 22 |
| 2 | 90 | - | 10 | 36 |

*) Polyamid 12

**) Polyethylen

### 2.3 Formmasse aus Polyamid 12 (1.3) und Polyoctenamer (1.4) (Tabelle III)

Aus 90 Gew.-% des weichmacherhaltigen Polyamids 12 (1.3) und 10 Gew.-% der in der Tabelle angegebenen Zusatzpolymeren wurde in einem Doppelschneckenkneter bei 220 °C Schmelzenmischungen hergestellt, die auf übliche Weise in Granulat übergeführt wurden. Es wurde auf eine Restfeuchte von 0,07 % getrocknet.

Aus den Granulaten wurden auf einem 25 D Einschneckenextruder mit 3-Zonenschnecke bei Massetemperaturen von etwa 220 °C Rohre mit dem Außendurchmesser von 6,35 mm und der Wanddicke von 1 mm hergestellt.

Ein Teil der Rohre wurde 2 Stunden in Wasser gekocht, ein zweiter wurde 24 Stunden im Wärmeofen bei 110 °C getempert. Je 10 der getemperten bzw. der in kochendem Wasser behandelten Rohre wurden mit dem in SAE J 844 beschriebenen Gerät Kälteschlagprüfungen bei -40 und -50 °C unterzogen.

## Tabelle III

| !Versuch | !Zusatzpolymeres | ! | Zahl der gebrochenen Rohre von 10 geprüften | | | ! |
| | | | gekocht | | getempert | |
| | | ! | -40 °C | -50 °C | -40 °C | -50 °C ! |
| D | - | ! | 10 | 10 | 8 | 10 ! |
| E | !EPDM (1.4) | ! | 10 | 10 | 10 | 10 ! |
| F | !EPDM (1.5) | ! | 1 | 8 | 1 | 0 ! |
| 3 | !Polyoctenamer (1.6)! | | 0 | 0 | 0 | 0 ! |

2.4 <u>Formmasse</u> <u>aus</u> <u>Polyamid</u> <u>6</u> (<u>1.1</u>), <u>einem</u> <u>funktionalisierten</u> <u>EPDM</u> (<u>1.5</u>) <u>und</u> <u>Polyoctenamer</u> (<u>1.4</u>) (<u>Tabelle</u> <u>IV</u>)
Das Granulat wurde gemäß 2.1 erhalten.

## Tabelle IV

| !Versuch | PA 6 | ! EPDM | !Polyoctenamer | Kerbschlagzähigkeit | ! |
| | | $[Gew.-\%]$ | | $[kJ/m^2]$ | ! |
| G | 80 | 20 | - | 61 | ! |
| 4 | 80 | 10 | 10 | 95 | ! |

**Ansprüche**

1. Schlagzähe Polyamid-Formmasse bestehend aus einem innigen Gemisch von
   A. 80 bis 98 Gew.-% eines Polyamids mit einem $Eta_{rel}$-Wert im Bereich von 1,2 bis 2,4 (gemessen analog DIN 53 727 in 0,5 g/dl m-Kresol-Lösung/25 °C)
   und
   B. 2 bis 20 Gew.-% eines Polyalkenameren mit einer Viskositätszahl im Bereich von 50 bis 350 ml/g (gemessen analog DIN 53 726 in 0,5 g/dl Toluol-Lösung/25 °C).

2. Schlagzähe Polyamid-Formmasse gemäß Anspruch 1, bestehend aus einem Gemisch von
   A. 85 bis 95 Gew.-% eines Polyamids
   und
   B. 5 bis 15 Gew.-% eines Polyalkenameren.

3. Schlagzähe Polyamid-Formmasse gemäß Anspruch 1, wobei als Komponente B. ein Polyalkenamer mit Epoxi-, Carboxyl-oder Carbonsäureanhydridgruppen als funktionellen Gruppen eingesetzt wird.

Hüls AG · Postfach 1320 · D-4370 Marl ·

Europäisches Patentamt
Erhardtstraße 27

8000 München 2

EPA EPO·OEB
DG 1
Reçu:
1 7 JUIN 1987

HÜLS AKTIENGESELLSCHAFT

Marl, Paul-Baumann-Straße 1

Telefon 02365/491 (Vermittlung)
Telex-Vermittlung 829211-0 hs d
Telex-Nebenst. 829211 ......... hs d
Telegramme Huelswerk Marl
Telefax a 02365/49-2000

Landeszentralbank Recklinghausen
BLZ 426000 00 Konto 08000
Postgiroamt Essen
BLZ 360100 43 Konto 4357-439

| Ihr Zeichen · Ihre Nachricht vom | Unser Zeichen · Unsere Nachricht vom | Telefon-Durchwahl | Marl |
|---|---|---|---|
| | O.Z. 4141 3765/15-p | 02365/49 55 49 | 04.06.87 |

EP-Patentanmeldung 87 102 327.1
"Schlagzähe Polyamid-Formmassen"

Bei der Durchsicht des deutschen Textes wurden nachstehende offensichtliche Schreibfehler bemerkt.

Es muß auf Seite 9 richtig heißen:

Tabelle III

| Versuch E EPDM | (1.5) statt (1.4) |
| Versuch F EPDM | (1.6) statt (1.5) |
| Versuch 3 Polyoctenamer | (1.4) statt (1.6) |

Versuch 2.4 (Überschrift)

| EPDM | (1.6) statt (1.5) |

Wir bitten daher, beiliegende Neuschrift von Seite 9 gegen die ursprüngliche Seite auszutauschen.

HÜLS AKTIENGESELLSCHAFT

i.V. Steil          Sticherling

Anlage

Zum Zwecke der Veröffentlichung,
Berichtigung(en)
☐ eingegeben
☐ eingegeben mit Ausnahme
   der gestrichenen Punkte
☐ nicht eingegeben
Unterschrift:          Datum: 24/6/87
                       Eingangsstelle

Vorsitzender des Aufsichtsrates Rudolf v Bennigsen-Foerder
Vorstand Carl Heinrich Krauch, Vorsitzender Horst Brinkmann Hermann Hinzen Gunter Kammholz
Günther Raatz Manfred Roh Heinrich Teitge